# EUROPEAN PATENT APPLICATION

(11) **EP 4 617 518 A1**
(43) Date of publication of application: **17.09.2025**
(21) Application number: 24425009.8
(22) Date of filing: 14.03.2024
(51) Int. Cl.: F16C 19/22, F16C 19/49, F16C 19/54, F16C 33/30, F16C 33/60

(54) **ROLLER BEARING FOR A TRANSMISSION ASSEMBLY FOR AN AIRCRAFT**

(71) Applicant: Leonardo S.p.a., 00195 Roma (IT)
(72) Inventor: Podda, Daniele, 21017 SAMARATE (VA) (IT); Pisani, Paolo, 21017 SAMARATE (VA) (IT); Tamborini, Marco, 21017 SAMARATE (VA) (IT); Motta, Nicoletta, 21017 SAMARATE (VA) (IT); Scaltritti, Diego, 21017 Samarate (VA) (IT); Sartori, Sergio, 21017 Samarate (VA) (IT)
(74) Representative: Studio Torta S.p.A.

(57) **Abstract**

A roller bearing (20) for a transmission assembly (3) for a helicopter (1) is described, comprising a first ring (51) extending around a first axis (A);
a second ring (50) extending around the first axis (A) and radially external to the first ring (51);
first roller bodies (55) shaped like conical rollers forming a single crown (54) coaxial to the first axis (A) and cooperating with the first and second rings (51, 50), so as to roll on respective first roller tracks (53, 52); and a third ring (70) that can rotate around the first axis (A) and defining a first shoulder (71) axially cooperating with the first roller bodies (55); a fourth ring (65) extending around the first axis (A) and radially spaced apart from the first shoulder (71); and multiple second roller bodies (66) interposed radially to the first axis (A) between the third ring (70) and fourth ring (65), and cooperating with the third and fourth rings (70, 65), so as to roll on them.

## Description

This invention relates to a roller bearing for a transmission assembly for an aircraft, in particular a helicopter.

In a known way, helicopters comprise a main transmission assembly designed to transmit the motion from one or more turbines to the main rotor, and multiple transmission assemblies designed to withdraw the motion from the main transmission assembly and to transmit it to the tail rotor and/or to multiple accessory devices, i.e. provided, for example, to provide the necessary power for operating the on-board equipment.

The main transmission assembly comprises, in turn, an input stage.

The input stage comprises, in brief:
- a shaft provided with a gear that can rotate around a rotation axis and receiving the motion from a turbine, so as to reduce the rotation speed around the axis;
- a casing rotationally fixed in relation to the above-mentioned axis;
- a first roller bearing radially interposed between the casing and the shaft, and provided to support the shaft both axially and radially in relation to the casing; and
- a second roller bearing radially interposed between the casing and the shaft, and provided to support the shaft only radially in relation to the casing.

The shaft rotates at a particularly high rotation speed, for example in the order of tens of thousands of revolutions per minute, and is subject to axial and radial forces due to interlocking.

In order to mainly react to the above-mentioned axial forces and operate at these rotation speeds, the first roller bearing comprises one or more crowns axially spaced apart and formed, each one, from first roller bodies shaped like spheres.

The second roller bearing comprises a single crown of second roller bodies shaped like cylindrical rollers.

In addition, the helicopters comprise a supply circuit for supplying pressurised lubricating oil to the moving components, including the roller bearings, in order to correctly lubricate these.

In the event of damage to the lubricating oil supply circuit, the pressure of the lubricating oil is reduced and, therefore, the operation of the transmission assembly is gradually degraded and, finally, impeded.

For certification purposes, in the above-mentioned case, ensuring correct operation of the transmission assembly for a certain time interval, in order to enable the helicopter to reach a landing site, is necessary in the sector.

The Applicant has observed that the first spherical roller bodies of the first bearing have, due to their rapidly attaining very high temperatures, a very limited duration and their rapid degradation limits, as a result, the time interval during which the transmission assembly can correctly operate in the event of damage to the lubricating oil supply circuit.

JP-A-2004239399 describes a roller bearing comprising:
- a radially internal ring that can be connected to a rotating shaft;
- a radially external ring that can be connected to a casing; and
- multiple roller bodies shaped like a single crown of conical rollers rolling on the above-mentioned internal and external rings.

The roller bearing also comprises:
- a first shoulder axially in contact with the roller bodies and designed to exert an axial force on the above-mentioned roller bodies that counteracts the axial expulsion force generated on the roller bodies by the fact that the tracks of the inner and outer rings are not parallel to each other; and
- a crown of roller bodies shaped like spheres axially interposed between the first shoulder and a second shoulder projecting radially from the first ring.

The spheres roll on the above-mentioned first and second shoulder.

The first shoulder is, therefore, rotated due to the contact with the roller bodies.

The Applicant has observed that this roller bearing is not optimised for use in the input stage of the above-mentioned transmission assembly for a helicopter, due to the high centrifugal forces acting on the conical rollers and on the spheres.

In fact, the single crown of conical rollers is able to react to the axial forces transmitted from the gear and acting on the shaft directed only in a first direction.

In flight, when the interlocking forces are reduced to zero or, in any case, are negligibly low, the high centrifugal forces would continue to persist on the rollers, tending to make them re-ascend the outer track and losing contact with the inner track.

As a secondary effect, there would also be movement in the axial direction of the whole shaft towards the rotating shoulder.

The axial force then acting on the spheres would push the shaft towards the cylindrical rollers of the second bearing and would cause a strong axial force transmitted by the last shoulder to the above-mentioned cylindrical rollers of the second bearing.

This axial forced would generate a scraping between the additional shoulder and the conical rollers.

Thus, a quantity of heat and wear would be generated that would not enable the second roller bearing to correctly operate for the time interval prescribed by the certification regulations, in the event of damage to the lubricating oil supply circuit.

In addition, the spherical bearing represented in JP-A-2004239399 is of the "front thrust" type, not suitable for operating at high rotation speeds since it does not provide an effective guide and radial attachment to the spheres, which are also subject to centrifugal forces.

The purpose of this invention is to produce a roller bearing, which easily and economically meets the need and requirement described above.

The above-mentioned purpose is achieved with this invention, which relates to a roller bearing for a transmission assembly for an aircraft, as claimed in claim 1.

In order to better understand this invention, a non-limiting preferred embodiment thereof will now be described by way of example with reference to the accompanying drawings, in which:
- Figure 1 is a perspective view of a helicopter comprising a roller bearing produced according to the precepts of this invention;
- Figure 2 is a longitudinal cross-section on an enlarged scale of a transmission assembly comprising the roller bearing produced according to the precepts of this invention; and
- Figure 3 shows, on an even more enlarged scale, the roller bearing in Figure 2, with parts removed for clarity.

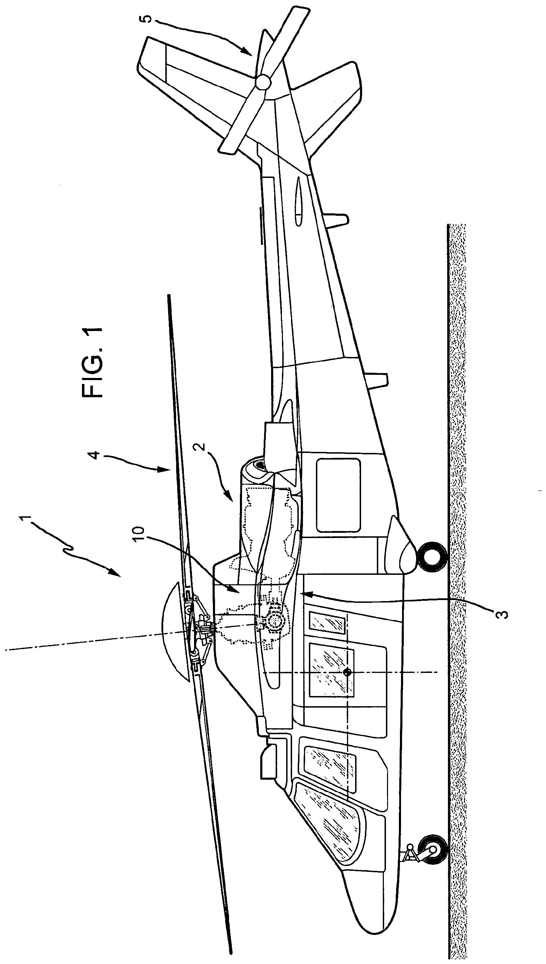

With reference to Figure 1, reference number 1 identifies an aircraft, in particular a helicopter comprising a pair of turbines 2, a main rotor 4, a tail rotor 5, and a primary transmission assembly 3, which is designed to transmit the motion from the turbines 2 to the main rotor 4 and to the tail rotor 5.

The helicopter 1 also comprises multiple secondary transmission assemblies, which are designed to transmit the motion from the primary transmission assembly 3 to respective accessory devices, known and not illustrated, i.e. provided, for example, to provide the necessary power for operating respective on-board equipment.

The transmission assembly, as will be illustrated below in more detail, needs to be lubricated with oil to operate correctly.

To this end, the helicopter 1 comprises a known lubrication circuit that is not illustrated and designed to supply the oil to the transmission assembly 3.

In one embodiment described by way of non-limiting example, the lubrication circuit comprises a tank and multiple nozzles designed to supply the oil from the tank to respective transmission assemblies 3.

The transmission assembly 3 is illustrated and described below and in Figures 1 to 3 only as far as necessary for understanding this invention.

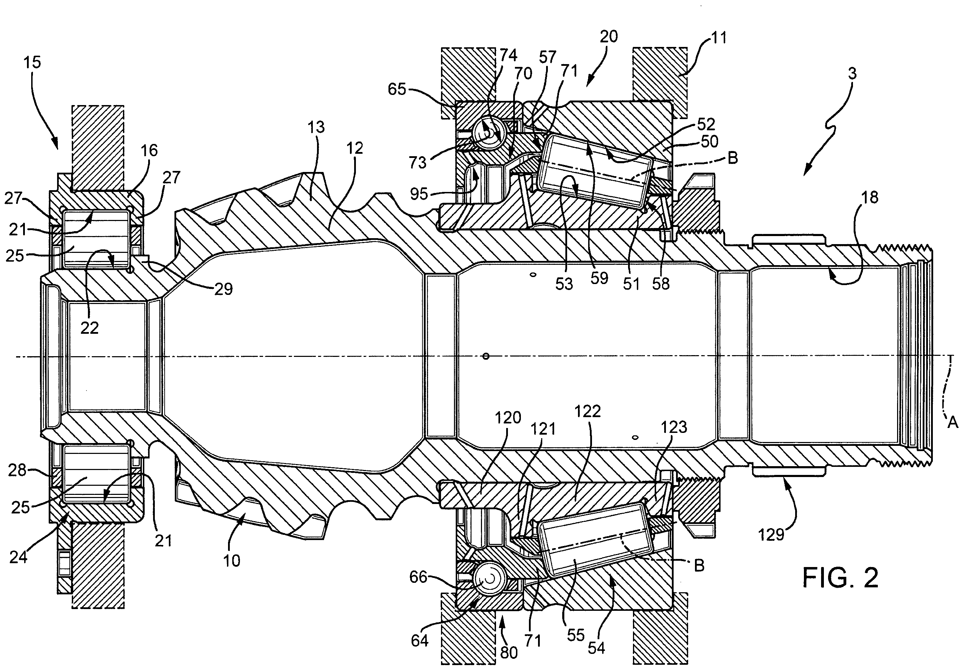

In particular, the transmission assembly 3 comprises:
- an input stage 10 designed to receive the motion directly from the turbines 2 and illustrated in Figure 2; and
- a series of additional stages (not illustrated) designed to receive the motion from the input stage 10 and to transmit it, in sequence to each other, to the main rotor 4 and to the tail rotor 5.

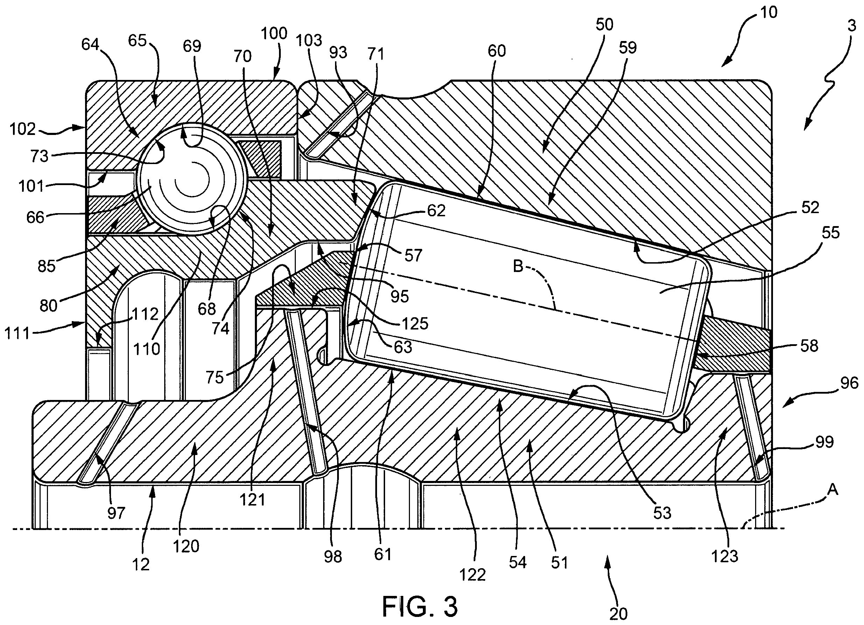

The input stage 10 comprises, in turn (Figures 2 and 3) :
- a casing 11 attached to a fixed structure (not illustrated) of the helicopter 1;
- a transmission shaft 12 mounted inside the casing 11 so it can rotate around an axis A; and
- a gear 13 produced, in the example illustrated, of a piece with the shaft 12.

The shaft 12 is connected, via a coupling 129 coaxial to it with an output component of the turbines 2.

The shaft 12 coaxially defines a compartment 18 inside of which the lubricating circuit nozzles feed oil in a way not illustrated since not necessary for the purposes of understanding this invention.

The input stage 10 also comprises a pair of bearings 15, 20 designed to support the shaft 12 so it can rotate about the axis A in relation to the casing 11.

The gear 13 is axially interposed between the bearings 15, 20.

More precisely, the bearing 15 comprises:
- a ring 16 fixed to the casing 11 and, thus, rotationally fixed in relation to the axis A and defining a cylindrical roller track 21; and
- a single crown 24 comprising multiple cylindrical rollers 25 radially interposed between the track 21 and a cylindrical roller track 22 defined by the shaft 12 and radially facing the track 21, and configured to roll on the tracks 21 and 22.

The bearing 15 also comprises a shaft 28 designed to keep the rollers 25 angularly spaced apart around the axis A.

The shaft 12 defines a radial shoulder 29 arranged in a position axially interposed between the rollers 25 and the gear 13.

The shoulder 29 is axially interposed between the rollers 25 and the gear 13.

The ring 16 also defines a pair of shoulders 27 axially spaced apart from each other and axially cooperating with respective axially opposite base surfaces of the rollers 25.

The bearing 15 enables the transmission of radial forces to the axis A between the casing 11 and the shaft 12.

In normal operating conditions of the helicopter 1, the gear 13 and, thus, the shaft 12 exchange with the crown of the first stage, via interlocking, an axial force having a first direction directed by the bearing 15 towards the bearing 20, and the shoulder 29 is basically inactive.

If the direction of the axial force is inverted or if the shaft 12 receives an axial force having a second direction opposite the first and directed by the bearing 20 towards the other bearing 15, the abutment of the shoulder 29 against the rollers 25 stops the translation of the shaft 12 in the second direction.

The bearing 20 enables the transmission of radial and axial forces mainly in the first direction.

The bearing 20 comprises, in turn:
- a ring 50 fixed to the casing 11 and, thus, rotationally fixed in relation to the axis A and defining a conical roller track 52;
- a ring 51 fixed to the shaft 12, that rotates integrally with the shaft 12 around the axis A and defining a conical roller track 53 radially facing the track 52; and
- a single crown 54 comprising multiple conical rollers 55 radially interposed between the tracks 52, 53 and configured to roll along the tracks 52, 53.

More specifically, each conical roller 55 extends along a transverse axis B incident to the axis A.

Each conical roller 55, in a known way, rotates around the relative axis B and describes a revolving motion together with the other conical rollers 55 around the axis A.

Each conical roller 55 comprises, in turn:
- a pair of base surfaces 57, 58 axially opposite each other and basically orthogonal to the axis B; and
- a lateral surface 59 that rolls without scraping on the tracks 52, 53 at the respective symmetrical generatrices 60, 61 in relation to the axis B and defining different, respective angles with the axis A.

The axes B converge in the axis A.

The base surface 57 has a greater area than the other base surface 58 and the conical rollers 55 are tapered proceeding from the base surface 57 towards the base surface 58.

With reference to Figure 3, the base surface 57 comprises, in turn:
- a region 62 instantaneously comprised between the axis B and the generatrix 60; and
- a region 63 instantaneously comprised between the axis B and the generatrix 61 during rotation of the conical rollers 55 around the axis B and the revolution of the conical rollers 55 themselves around the axis A.

The generatrices 60, 61 respectively define a first angle and a second angle different to each other in relation to the axis A.

In particular, the first angle is larger than the second angle.

The conical rollers 55 are preferably made of ceramic material.

The bearing 20 also comprises a ring 70, which can rotate around the axis A, defining a shoulder 71 arranged to axially abut against the base surfaces 57 of respective conical rollers 55.

Advantageously, the bearing 20 also comprises:
- a ring 65 extending around the axis A and radially spaced apart from the shoulder 71; and
- a single crown 64 formed from multiple spheres 66 interposed between the rings 70, 65 radially to the axis A, and cooperating with the shoulder 71 and the ring 65 so as to roll on respective roller tracks 68, 69 (Figure 3) defined by corresponding rings 70, 65.

In this way, the rings 70, 65 and the spheres 66 define an additional bearing 80 housed inside the bearing 20.

The ring 65 is rotationally fixed in relation to the axis A. More precisely, the ring 65 is fixed to the casing 11.

In the case illustrated, the rings 50, 65 are made in respective, separate bodies. In particular, the rings 65, 70 are arranged in axial contact with each other.

The spheres 66 define a single crown of spheres.

The spheres 66 are preferably made of ceramic material.

The ring 65 comprises, in turn (Figure 3):
- a surface 100 fixed to the casing 11;
- a surface 101 radially opposite the surface 100 and defining the roller track 69; and
- a pair of radially extending surfaces 102, 103 that are axially opposite each other and radially interposed between the surfaces 100, 101.

The surface 103 is axially interposed between the surface 102 and the ring 50 and axially abuts against the ring 50.

The ring 70 comprises, in turn:
- the shoulder 71;
- a wall 110 mainly extending axially and defining the roller track 68 and the shoulder 71; and
- a shoulder 111 mainly extending radially and projecting so it overhangs the wall 110 towards the ring 51 and radially facing the surface 102.

The wall 110 is axially interposed between the shoulders 71, 111.

The ring 70 is radially spaced apart from the ring 50.

The shoulder 71 axially abuts against the region 62 of the base surface 57 of each conical roller 55.

The bearing 80 also comprises a shaft 85 designed to keep the spheres 66 angularly spaced apart around the axis A.

The bearing 80 is, in the case illustrated, an oblique contact spherical bearing, characterised by the particular deep throat shape of the outer track for better operating at high speeds.

In particular, the spheres 66 have a pair of spherical surfaces 74, 73 diametrically opposite each other, not point-like, and in non-point-like contact respectively with the roller tracks 68, 69.

The surface 74 is axially interposed between the surface 73 and the shoulder 71, so that the bearing 80 can react to the axial force acting on the conical rollers 55 in the second direction.

The ring 51 comprises, in turn, proceeding parallel to the axis A according to a direction oriented by the ring 65 to the ring 50:
- a section 120 mainly extending axially;
- a shoulder 121 mainly extending radially;
- a section 122 defining the roller track 53; and
- a shoulder 123 also extending radially.

The shoulders 121, 123 radially project from the sections 120, 122 respectively towards the ring 70 and the ring 50.

The conical rollers 55 are axially interposed between the shoulders 121, 123.

The shoulder 121 is axially spaced apart by the conical rollers 55 when the spheres 66 operate correctly.

If the spheres 66 are destroyed, the different angles of conicity of the tracks 52, 53 in relation to the axis A cause an axial force on the conical rollers 55 directed in the second direction, i.e. from the base surface 58 towards the base surface 57. This axial force causes a resulting axial shift from the conical rollers 55 in the second direction up to a position in which the shoulder 121 axially abuts against the base surface 57 and counteracts the above-mentioned axial force, enabling the correct operation of the bearing 20 in a new emergency operation configuration.

The shoulder 123 is axially spaced apart by the base surfaces 58 of the conical rollers 55, if the shaft's structure does not provide for the shoulder 29, it can act as an axial attachment if there is an occasional thrust inversion acting on the shaft.

In this case, the tilt of the lateral surface of the shoulder 123 is conveniently chosen so as to ease the contemporaneous contact of the conical roller 55 with the track 52 and the shoulder 71 pushing on the connection of the face 58.

The bearing 20 also comprises a shaft 75 designed to keep the conical rollers 55 equally spaced around the axis A, which can rotate around the axis A and which is guided in rotation by the shoulders 121, 123.

The shoulders 111, 121 are axially spaced apart from each other. More specifically, the shoulder 121 is axially interposed between the shoulder 111 and the shoulder 123.

The shoulder 111 comprises a free, radially inner end 112 and the shoulder 121 comprises a free, radially outer end 125.

The end 112 is radially arranged further inside than the other end 125.

The bearing 20 also comprises:
- a compartment 95 housing the conical rollers 55 and the shaft 75; and
- a lubricant distribution circuit 96 (only schematically illustrated in Figure 3) designed to place the compartments 18, 95 in fluidic communication and to thus enable the lubricant to lubricate the conical rollers 55 via centrifugal action.

In particular, the rings 50, 65 delimit the compartment 95 in a position radially outside the axis A and the ring 70 delimits the compartment 95 in a position radially inside the axis A.

The circuit 96 comprises multiple pipes 97, 98, 99 passing through the ring 51, so as to place the compartment 18 and the compartment 95 in fluidic communication through corresponding through pipes not illustrated passing through the shaft 12.

In particular, the pipe 97 crosses the section 120, the pipe 98 crosses the shoulder 121, and the pipe 99 crosses the shoulder 123.

The pipes 97, 98, 99 extend along respective axes tilted by respective acute angles in relation to a direction radial to the axis A.

In particular, the pipe 97 and the pipes 98, 99 converge on each other, proceeding radially to the axis A from the compartment 18 towards the compartment 95.

The pipes 98, 99 extend, in particular, between the compartment 18 and respective portions of the shaft 75 that are axially offset.

In particular, the pipes 98, 99 are fluidically connected with a surface radially outside the ring 51.

The circuit 96 comprises, in addition, a pipe 93 crossing the ring 50 transverse to the axis A and in fluidic communication with the compartment 95.

In use, the turbines 2 transmit a given value of torque to the shaft 12 via the coupling 129 and rotate it around the axis A.

The coupling 129 and the shaft 12 receive an axial force in the first direction due to the interlocking of the first reduction stage.

The bearings 15 and 20 support the shaft 12 so that it can rotate in relation to the casing 11 around the axis A.

More specifically, the bearing 15 transmits mainly radial forces between the shaft 12 and the casing 11.

The bearing 20 transmits axial and radial forces between the shaft 12 and the casing 11.

In particular, following the rotation of the shaft 12 around the axis A, the conical rollers 55 describe a rotation motion around the respective axes B and revolution around the axis A.

Below, the operation of the bearing 10 is described when the spheres 66 of the bearing 80 are intact as illustrated in Figures 2 and 3.

More specifically, the conical rollers 55 are subject to an axial expulsion force from the rings 50, 51 directed in the second direction, due to the fact that the relative conical shape means that the generatrices 60, 61 lie on straight lines defining respective, different angles with the axis A and, thus, exchange unbalanced forces with the respective tracks 52, 53.

The shoulder 71 in contact with the base surface 57 and axially fixed to the casing 11 reacts to this axial expulsion force and ensures that the conical rollers 55 remain in the correct axial position.

In particular, the base surface 57 of the conical rollers 55 rotate the shoulder 71 around the axis A.

At the same time, the spheres 66 roll without scraping on the roller tracks 68, 69 respectively defined by the shoulder 71 and the ring 65.

The oil is fed by the nozzles inside the compartment 18 and, following this, reaches the compartment 95 housing the conical rollers 55, thus keeping them lubricated.

If the spheres 66 are destroyed, the above-mentioned axial expulsion force causes the axial shift of the conical rollers 55 up to a position wherein the shoulder 121 axially abuts against the base surface 57 in a way not illustrated in the attached figures.

At this point, the shoulder 121 counteracts the above-mentioned axial force, axially attaching the conical rollers 55 and enabling the correct operation of the bearing 20.

If it is subject to a direct axial force in the second direction, the conical rollers 55 are kept in position by the axial abutment against the shoulder 71.

The axial abutment of the shoulder 123 against the base surfaces 58 prevents the shaft 12 from slipping.

The advantages afforded by the bearing 20 provided according to the teachings of this invention are apparent from an examination of it.

In particular, the shoulder 71 is supported in a rotatable manner around the axis A by the ring 65 fixed in relation to the axis A via the spheres 66.

In this way, unlike the solution known in JP-A-2004239399 and described in the introduction of this description, on one side, the axial force transmitted by the conical rollers 55 between the tracks 52 and 52 is finally counteracted by the casing 11.

The shoulder 71 provides a reaction force that counteracts the tendency of the conical rollers 55 to be expelled owing to the fact that the tracks 52 and 53 are not parallel. The ring 70 being free to rotate, the friction generated in contact between the tail of the roller 62 and the shoulder 71 is, advantageously, minimised.

On other hand, the bearing 80 is formed from the rings 65, 70 radially facing each other and shaped, so that the spheres 66 are in angular contact with the roller tracks 68, 69. In this way, the bearing 80 is basically a bearing in angular contact with a deep throat shape on the outer track and is, therefore, able to operate at high rotation speeds.

In contrast, the solution known from JP-A-2004239399 basically uses an axial thrust bearing to support the rotating shoulder. This solution is, in a known way, entirely unsuited to operate at high rotation speeds typical of the operating use of the shaft 12 of the input stage 10 of the transmission assembly 3.

Thus, it is possible to largely reduce the relative friction between the shoulder 71 and regions 62 of the conical rollers 55, with resulting reduction of the generation of heat and increase of the duration of the bearing 20.

Thus, it is possible to ensure, including when oil is lacking, the correct operation of the transmission assembly 3 for the time interval prescribed by the certification requirements.

The shoulder 71 is arranged so that it axially abuts against the region 62 of the base surface 57 of each conical roller 55, instantaneously comprised between the axis B and the corresponding generatrix 60.

The generatrix 60 is rotationally fixed to the axis A and defines, therefore, the location of the centres of instantaneous rotation of the relative conical roller 55, i.e. the zero-speed points.

The generatrix 61 can rotate around the axis A integrally with the shaft 12 and defines, therefore, the location of the maximum-speed points.

Therefore, the region 62 is characterised by particularly low rotation speeds and rotates the shoulder 71 with the same, particularly low rotation speed, thus reducing the generation of heat within the bearing 80 and contributing to increasing, correspondingly, the operational duration of the bearing 20.

The bearing 20 also comprises a shoulder 121 axially spaced apart from the conical rollers 55 in a normal operating condition of the spheres 66, so as not to exert any axial thrust on the conical rollers 55 themselves.

The shoulder 121, in contrast, axially abuts against the roller bodies 55 when the spheres 66 are destroyed that causes the axial distancing of the shoulder 71 from the conical rollers 55 so as to exert an axial thrust on said first roller bodies 55 that impede their expulsion from the rings 50, 51.

The above-mentioned shoulder 121 is, in addition, effectively used to rotationally support the rotation of the shaft 75.

The ring 51 comprises the shoulder 123 arranged abutting against the base surfaces 58 of corresponding conical rollers 55.

In this way, if the shaft 12 is subject to an axial force in the second direction, the conical rollers 55 are kept in position by the axial abutment against the shoulder 71 and the axial abutment of the shoulder 123 against the base surfaces 58 prevents the axial slippage of the shaft 12 in the second direction.

Lastly, it is clear that modifications and variations may be made to the roller bearing 20 described and illustrated herein without departing from the scope of the present invention as set forth in the appended claims.

In particular, the rings 50, 65 could be made of a single body.

The shaft 12 could also not comprise the shoulder 29.

The transmission assembly 3 could also be used in an electric rotor for aeronautics applications.

The roller bodies 66 could also be conical rollers.

The pipe 93 could extend through the ring 65 or the ring 70 instead of through the ring 50.

## Claims

1. A roller bearing (20) for a transmission assembly (3) for a helicopter (1), comprising:
- a first ring (51) extending around a first axis (A) ;
- a second ring (50) extending around said first axis (A) and radially external to said first ring (51);
- multiple first roller bodies (55) shaped like conical rollers, forming a single crown (54) coaxial to said first axis (A), and cooperating with said first and second rings (51, 50), so as to roll on respective first roller tracks (53, 52) of corresponding said first and second rings (51, 50) and to enable the relative rotation between said first and second rings (51, 50) around said first axis (A); and
- a third ring (70) that can rotate around said first axis (A) and defining a first shoulder (71) axially cooperating with said first roller bodies (55);
**characterised in that** it comprises:
- a fourth ring (65) extending around said first axis (A) and radially spaced apart from said first shoulder (71); and
- multiple second roller bodies (66) interposed radially to said first axis (A) between said third ring (70) and fourth ring (65), and cooperating with said third and fourth rings (70, 65), so as to roll on respective said third and fourth rings (70, 65).

2. The roller bearing according to claim 1, **characterised in that** said second roller bodies (66) are spheres or conical rollers.

3. The bearing according to claim 1 or 2, **characterised in that** said fourth ring and second ring (65, 50) are separate to and integral with each other.

4. The bearing according to claim 1 or 2, **characterised in that** said fourth and second rings (65, 50) are made of a single piece.

5. The bearing according to any of the previous claims, **characterised in that** it comprises a second shoulder (121) defined by said first ring (51) and axially spaced apart from said first roller bodies (55), in a normal operating condition of said second roller bodies (66);
said second shoulder (121) being axially in contact with said first roller bodies (55) if said second roller bodies (66) break down, so as to exert an axial thrust on said first roller bodies (55).

6. The bearing according to claim 5, **characterised in that** it comprises a first shaft (75) designed to keep said first roller bodies (55) spaced apart, which can rotate around said first axis (A) and radially supported by said second shoulder (121).

7. The bearing according to any of the previous claims, **characterised in that** said third ring (70) comprises a third shoulder (111) axially spaced apart from said second shoulder (121) and radially projecting so that it overhangs from said third ring (70) towards said first ring (51);
said second shoulder (121) being axially interposed between said third shoulder (111) and said first roller bodies (55);
said third shoulder (111) comprising a first, radially internal free end (112) radially spaced apart from said first ring (51);
said second shoulder (121) comprising a second, radially external free end (125) radially spaced apart from said third ring (71);
said first end (112) of said third shoulder (111) being arranged radially further inside than said second end (125) of said second shoulder (121).

8. The bearing according to claim 7, **characterised in that** it comprises a distribution circuit (96) configured to feed said first roller bodies (55) and/or said second roller bodies (66) with a lubricant;
said distribution circuit (96) comprising, in turn and optionally:
- one or more first pipes (97, 98, 99) crossing said first ring (51) passing transversely to said first axis (A), and fluidically connected with the radially outer surface of said first ring (51); and/or
- at least one second pipe (93) crossing said second ring (50) or said third ring (70) or said fourth ring (65) passing transversely to said first axis (A), and fluidically connected with a housing compartment (95) for said first roller bodies (55) radially defined between said first and second rings (50, 51).

9. The bearing according to any of the previous claims, **characterised in that** said first roller bodies (55) extend around respective second axes (B) and each comprise:
- a respective first base surface (57) in contact with said first shoulder (71);
- a respective second base surface (58) with a smaller area than said first base surface (57) and axially opposite said first base surface (58); and
- a respective first and second generatrix (60, 61) converging with each other, proceeding from said first base surface (57) towards said second base surface (58);
said second generatrices (61) being instantaneously in contact, in use, with said first ring (51), and said first generatrices (60) being instantaneously in contact, in use, with said second ring (50).

10. The bearing according to claim 9, **characterised in that** said first shoulder (71) is arranged in axial abutment against a region (62) of the first base surface (57) of each roller body (55) instantaneously comprised, in use, between said second axis (B) and the corresponding first generatrix (60).

11. The bearing according to any of the previous claims **characterised in that** said fourth and third rings (70, 65) respectively define a third and fourth roller track (68, 69) on which said second roller bodies (66) roll;
said second roller bodies (66) being shaped like spheres each having:
- a first spherical surface (74) in distributed contact against said third roller track (68); and
- a second spherical surface (73) in distributed against said fourth roller track (69);
said first surface (74) being axially interposed between said second surface (73) and said first shoulder (71).

12. The bearing according to any of the previous claims, **characterised in that** said first ring (51) defines a fourth radial shoulder (123) axially spaced apart from said roller bodies (55) on the side axially opposite said first shoulder (71); and/or
**characterised in that** said first roller bodies (55) or said second roller bodies (66) are made of a ceramic material.

13. A transmission assembly (3) for a helicopter (1), comprising:
- a support body (11) rotationally fixed to said first axis (A);
- an input shaft (12) that can rotate around said first axis (A); and
- a first bearing (20) radially interposed between said shaft (12) and said support body (11), configured to enable the rotation of said shaft (12) in relation to said support body (11) around said first axis (A), and made according to any of the previous claims.

14. The transmission assembly according to claim 13, **characterised in that** it comprises a second roller bearing (15) radially interposed between said shaft (12) and said support body (11), axially spaced apart from said first bearing (20) and configured to only transmit a radial force between said shaft (12) and support body (11); and/or
**characterised in that** said shaft (12) defines a cavity (18) inside of which, in use, said lubricant is fed and fluidically connected with said compartment (95) via said first pipe (97) and second pipes (98, 99).

15. A helicopter (1) comprising:
- a drive component (2) configured to generate torque in use;
- a rotor (4); and
- a transmission assembly (3) configured to transmit said torque from said drive component to said rotor (4), and made according to claim 13 or 14;
said transmission assembly (3) also comprising a gear (13) fitted on or made of a single piece with said shaft (12) and receiving, in use, said torque from said drive component (2).

## Amended claims

### Amended claims in accordance with Rule 137(2) EPC.

1. A roller bearing (20) for a transmission assembly (3) for a helicopter (1), comprising:
- a first ring (51) extending around a first axis (A);
- a second ring (50) extending around said first axis (A) and radially external to said first ring (51);
- multiple first roller bodies (55) shaped like conical rollers, forming a single crown (54) coaxial to said first axis (A), and cooperating with said first and second rings (51, 50), so as to roll on respective first roller tracks (53, 52) of corresponding said first and second rings (51, 50) and to enable the relative rotation between said first and second rings (51, 50) around said first axis (A);
- a third ring (70) that can rotate around said first axis (A) and defining a first shoulder (71) axially cooperating with said first roller bodies (55);
- a fourth ring (65) extending around said first axis (A) and radially spaced apart from said first shoulder (71); and
- multiple second roller bodies (66) interposed radially to said first axis (A) between said third ring (70) and fourth ring (65), and cooperating with said third and fourth rings (70, 65), so as to roll on respective said third and fourth rings (70, 65);
**characterised in that** said third ring (70) comprises a third shoulder (111) axially spaced apart from said second shoulder (121) and radially projecting so that it overhangs from said third ring (70) towards said first ring (51);
said second shoulder (121) being axially interposed between said third shoulder (111) and said first roller bodies (55);
said third shoulder (111) comprising a first, radially internal free end (112) radially spaced apart from said first ring (51);
said second shoulder (121) comprising a second, radially external free end (125) radially spaced apart from said third ring (71);
said first end (112) of said third shoulder (111) being arranged radially further inside than said second end (125) of said second shoulder (121);
said first roller bodies (55) extending around respective second axes (B) and each comprising:
- a respective first base surface (57) in contact with said first shoulder (71);
- a respective second base surface (58) with a smaller area than said first base surface (57) and axially opposite said first base surface (58); and
- a respective first and second generatrix (60, 61) converging with each other, proceeding from said first base surface (57) towards said second base surface (58);
said second generatrices (61) being instantaneously in contact, in use, with said first ring (51), and said first generatrices (60) being instantaneously in contact, in use, with said second ring (50);
said first shoulder (71) being arranged in axial abutment against a region (62) of the first base surface (57) of each roller body (55) instantaneously comprised, in use, between said second axis (B) and the corresponding first generatrix (60).

2. The roller bearing according to claim 1, **characterised in that** said second roller bodies (66) are spheres or conical rollers.

3. The bearing according to claim 1 or 2, **characterised in that** said fourth ring and second ring (65, 50) are separate to and movable integrally with each other.

4. The bearing according to claim 1 or 2, **characterised in that** said fourth and second rings (65, 50) are made of a single piece.

5. The bearing according to any of the previous claims, **characterised in that** it comprises a second shoulder (121) defined by said first ring (51) and axially spaced apart from said first roller bodies (55), in a normal operating condition of said second roller bodies (66);
said second shoulder (121) being axially in contact with said first roller bodies (55) if said second roller bodies (66) break down, so as to exert an axial thrust on said first roller bodies (55).

6. The bearing according to claim 5, **characterised in that** it comprises a roller cage (75) designed to keep said first roller bodies (55) spaced apart, which can rotate around said first axis (A) and radially supported by said second shoulder (121).

7. The bearing according to any one of the foregoing claims, **characterised in that** it comprises a distribution circuit (96) configured to feed said first roller bodies (55) and/or said second roller bodies (66) with a lubricant;
said distribution circuit (96) comprising, in turn and optionally:
- one or more first pipes (97, 98, 99) crossing said first ring (51) passing transversely to said first axis (A), and fluidically connected with the radially outer surface of said first ring (51); and/or
- at least one second pipe (93) crossing said second ring (50) or said third ring (70) or said fourth ring (65) passing transversely to said first axis (A), and fluidically connected with a housing compartment (95) for said first roller bodies (55) radially defined between said first and second rings (50, 51).

8. The bearing according to any of the previous claims **characterised in that** said fourth and third rings (70, 65) respectively define a third and fourth roller track (68, 69) on which said second roller bodies (66) roll;
said second roller bodies (66) being shaped like spheres each having:
- a first spherical surface (74) in distributed contact against said third roller track (68); and
- a second spherical surface (73) in distributed against said fourth roller track (69);
said first surface (74) being axially interposed between said second surface (73) and said first shoulder (71).

9. The bearing according to any of the previous claims, **characterised in that** said first ring (51) defines a fourth radial shoulder (123) axially spaced apart from said roller bodies (55) on the side axially opposite said first shoulder (71); and/or
**characterised in that** said first roller bodies (55) or said second roller bodies (66) are made of a ceramic material.

10. A transmission assembly (3) for a helicopter (1), comprising:
- a support body (11) rotationally fixed to said first axis (A);
- an input shaft (12) that can rotate around said first axis (A); and
- a first bearing (20) radially interposed between said shaft (12) and said support body (11), configured to enable the rotation of said shaft (12) in relation to said support body (11) around said first axis (A), and made according to any of the previous claims.

11. The transmission assembly according to claim 10, **characterised in that** it comprises a second roller bearing (15) radially interposed between said shaft (12) and said support body (11), axially spaced apart from said first bearing (20) and configured to only transmit a radial force between said shaft (12) and support body (11); and/or
**characterised in that** said shaft (12) defines a cavity (18) inside of which, in use, said lubricant is fed and fluidically connected with said compartment (95) via said first pipe (97) and second pipes (98, 99).

12. A helicopter (1) comprising:
- a drive component (2) configured to generate torque in use;
- a rotor (4); and
- a transmission assembly (3) configured to transmit said torque from said drive component to said rotor (4), and made according to claim 13 or 14;
said transmission assembly (3) also comprising a gear (13) fitted on or made of a single piece with said shaft (12) and receiving, in use, said torque from said drive component (2).
